# EUROPEAN PATENT APPLICATION

(11) **EP 1 928 097 A2**
(43) Date of publication of application: **04.06.2008**
(21) Application number: 07023269.9
(22) Date of filing: 30.11.2007
(51) Int. Cl.: H04B 1/16, H04M 1/00, H04M 1/725, H04M 11/00, H04N 5/00, H04N 5/44, H04N 5/445, H04N 7/14

(54) **Television device with telephone function, and television system including such television device**

(30) Priority: 01.12.2006 JP 2006325783
(71) Applicant: Funai Electric Co., Ltd., Daito-shi, Osaka 574-0013 (JP)
(72) Inventor: Zuo, Guokun, Osaka 574-0013 (JP); Masaki, Yasuo, Osaka 574-0013 (JP); Okazaki, Akinori, Osaka 574-0013 (JP); Kokado, Masao, Osaka 574-0013 (JP); Murakami, Sadanori, Osaka 574-0013 (JP); Takeshita, Masahiro, Osaka 574-0013 (JP); Tsubota, Hirono, Osaka 574-0013 (JP)
(74) Representative: Grünecker, Kinkeldey, Stockmair & Schwanhäusser Anwaltssozietät

(57) **Abstract**

A remote controller device (102) includes a first audio processor (23) converting externally received sound to an external audio signal, an operation unit (28) including a plurality of buttons (B1-B6), detecting whether each of the plurality of buttons (B1-B6) is depressed or not to generate an operation signal representing the detected result, and a transmitter (29) converting the external audio signal and the operation signal to a radio signal for transmission. A television device (101) includes a receiver (15) receiving the radio signal from the remote controller device (102) for conversion to the external audio signal and the operation signal, a network interface unit (8) transmitting a telephone signal onto a network (106) based on the external audio signal and the operation signal, and a display unit (7) displaying a depressed form or non-depressed form of each of the plurality of buttons (B1-B6) based on the operation signal.

## Description

### BACKGROUND OF THE INVENTION

### Field of the Invention

The present invention relates to television devices and television systems, particularly a television device with a telephone function, and a television system including such a television device.

### Description of the Background Art

The television industry is moving towards integrating multiple and higher functions, and television devices with a telephone function such as an IP (Internet Protocol) telephone have been developed (for example, refer to Japanese Patent Laying-Open Nos. 2005-039540 (Patent Document 1), 2004-080289 (Patent Document 2), 2002-281174 (Patent Document 3), 2005-109666 (Patent Document 4), and 2002-009968 (Patent Document 5). It is assumed that the user will use the remote controller device directed to remote control of the television device to carry out conversation through the television device with a telephone function.

However, the television devices of Patent Documents 1-5 are not provided with sufficient measures to improve the operability of the remote controller device.

### SUMMARY OF THE INVENTION

An object of the present invention is to provide a television device and a television system that allows improvement in the operability of the remote controller device.

A television system according to an aspect of the present invention includes a television device and a remote controller device. The remote controller device includes a first audio processor converting externally received sound to an external audio signal, an operation unit including a plurality of buttons, detecting whether each of the plurality of buttons is depressed or not to generate an operation signal indicating the detected result, and a transmitter converting the external audio signal and the operation signal to a radio signal for transmission. The television device includes a receiver receiving the radio signal from the remote controller device for conversion to the external audio signal and the operation signal, a network interface unit transmitting a telephone signal onto a network based on the external audio signal and the operation signal, a display unit displaying a depressed form or non-depressed form of each of the plurality of buttons based on the operation signal, a second audio processor generating an operation sound signal corresponding to a depressed button based on the operation signal, and a speaker issuing sound based on the operation sound signal. The plurality of buttons include a mode switching button to designate selection of a telephone mode or a television mode, and a numeric-key button for entry of a telephone number. The receiver also receives a television broadcast signal. The television device further includes a video processor extracting a video signal from the received television broadcast signal. The display unit concurrently displays, based on the operation signal, a number corresponding to a depressed numeric-key button, a depressed or non-depressed form of each of the plurality of buttons, and video based on the video signal, when the numeric-key button is depressed in a telephone mode selected state. The second audio processor further extracts a television audio signal from the received television broadcast signal. The speaker issues sound based on the extracted television audio signal at a volume differing between a telephone mode selected state and a television mode selected state based on the operation signal. The display unit concurrently displays, based on the operation signal and external audio signal, an indicator representing the volume of sound received by the first audio processor, a depressed or non-depressed form of each of the plurality of buttons, and video based on the video signal, when in the telephone mode selected state.

A television system according to another aspect of the present invention includes a television device and a remote controller device. The remote controller device includes a first audio processor converting externally received sound to an external audio signal, an operation unit including a plurality of buttons, detecting whether each of the plurality of buttons is depressed or not to generate an operation signal representing the detected result, and a transmitter converting the external audio signal and the operation signal to a radio signal for transmission. The television device includes a receiver receiving the radio signal from the remote controller device for conversion to the external audio signal and the operation signal, a network interface unit transmitting a telephone signal onto a network based on the external audio signal and operation signal, and a display unit displaying a depressed form or non-depressed form of each of the plurality of buttons based on the operation signal.

Preferably, the television device further includes a second audio processor generating an operation sound signal corresponding to the depressed button based on the operation signal, and a speaker issuing sound based on the operation sound signal.

Preferably, the plurality of buttons include a mode switching button to designate selection of a telephone mode or a television mode, and a numeric-key button for entry of a telephone number. The display unit displays a number corresponding to a depressed numeric-key button when the numeric-key button is depressed in a telephone mode selected state based on the operation signal.

Preferably, the receiver further receives a television broadcast signal. The television device further includes a video processor extracting a video signal from the received television broadcast signal. The display unit concurrently displays, based on the operation signal, a depressed form or non-depressed form of each of the plurality of buttons, and video based on the video signal.

Preferably, the plurality of buttons include a mode switching button to designate selection of a telephone mode or a television mode, and a numeric-key button for entry of a telephone number. The receiver further receives a television broadcast signal. The television device further includes a video processor extracting a video signal from the received television broadcast signal. The display unit concurrently displays, based on the operation signal, a number corresponding to a depressed numeric-key button, a depressed form or non-depressed form of each of the plurality of buttons, and video based on the video signal, when the numeric-key button is depressed in a telephone mode selected state.

Preferably, the plurality of buttons include a mode switching button to designate selection of a telephone mode or a television mode. The receiver further receives a television broadcast signal. The television device further includes a second audio processor extracting a television audio signal from the received television broadcast signal, and a speaker issuing sound based on the extracted television audio signal at a volume differing between a telephone mode selected state and a television mode selected state based on the operation signal.

Preferably, the plurality of buttons include a mode switching button to designate selection of a telephone mode or a television mode. The receiver further receives a television broadcast signal. The television device further includes a video processor extracting a video signal from the received television broadcast signal. The display unit concurrently displays, based on the operation signal and the external audio signal, an indicator representing the volume of sound received by the first audio processor, a depressed form or non-depressed form of each of the plurality of buttons, and video based on the video signal, when in a telephone mode selected state.

A television device according to an aspect of the present invention is remotely controlled by a remote controller device. The remote controller device includes a first audio processor converting externally received sound to an external audio signal, an operation unit including a plurality of buttons, detecting whether each of the plurality of buttons is depressed or not to generate an operation signal representing the detected result, and a transmitter converting the external audio signal and the operation signal to the radio signal for transmission. The television device includes a receiver receiving the radio signal from the remote controller device for conversion into the external audio signal and the operation signal, a network interface unit transmitting a telephone signal onto a network based on the external audio signal and the operation signal, and a display unit displaying a depressed form or non-depressed form of each of the plurality of buttons based on the operation signal.

In accordance with the present invention, the operability of the remote controller device can be improved.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 represents a configuration of a television system 201 according to an embodiment of the present invention.
Fig. 2 is a functional block diagram of a configuration of a television device according to an embodiment of the present invention.
Fig. 3 is a functional block diagram of a configuration of a remote controller device according to an embodiment of the present invention.
Fig. 4 represents an appearance of an operation input unit 28 at a remote controller device 102 according to an embodiment of the present invention.
Fig. 5 is a flowchart of the operation procedure of television system 201 according to an embodiment of the present invention.
Fig. 6A represents a screen display and appearance of a television device 101 according to an embodiment of the present invention.
Fig. 6B represents an appearance of remote controller device 102 corresponding to Fig. 6A.
Fig. 7A represents a screen display and appearance of television device 101 according to an embodiment of the present invention.
Fig. 7B represents an appearance of remote controller device 102 corresponding to Fig. 7A.
Fig. 8A represents a screen display and appearance of television device 101 according to an embodiment of the present invention.
Fig. 8B represents an appearance of remote controller device 102 corresponding to Fig. 8A.
Fig. 9A represents a screen display and appearance of television device 101 according to an embodiment of the present invention.
Fig. 9B represents an appearance of remote controller device 102 corresponding to Fig. 9A.
Fig. 10A represents a screen display and appearance of television device 101 according to an embodiment of the present invention.
Fig. 10B represents an appearance of remote controller device 102 corresponding to Fig.10A.
Fig. 11A represents a screen display and appearance of television device 101 according to an embodiment of the present invention.
Fig. 11B represents an appearance of remote controller device 102 corresponding to Fig. 11A.
Fig. 12A represents a screen display and appearance of television device 101 according to an embodiment of the present invention.
Fig. 12B represents an appearance of remote controller device 102 corresponding to Fig. 12A.
Fig. 13 is a flowchart of the procedure in a dial process carried out by television system 201 according to an embodiment of the present invention.
Fig. 14 is a flowchart of the procedure in a calling process carried out by television system 201 according to an embodiment of the present invention.
Fig. 15 is a flowchart of the procedure of a disconnection process carried out by television system 201 according to an embodiment of the present invention.

### DESCRIPTION OF THE PREFERRED EMBODIMENTS

Embodiments of the present invention will be described hereinafter with reference to the drawings. In the drawings, the same or corresponding components have the same reference characters allotted, and description thereof will not be repeated.

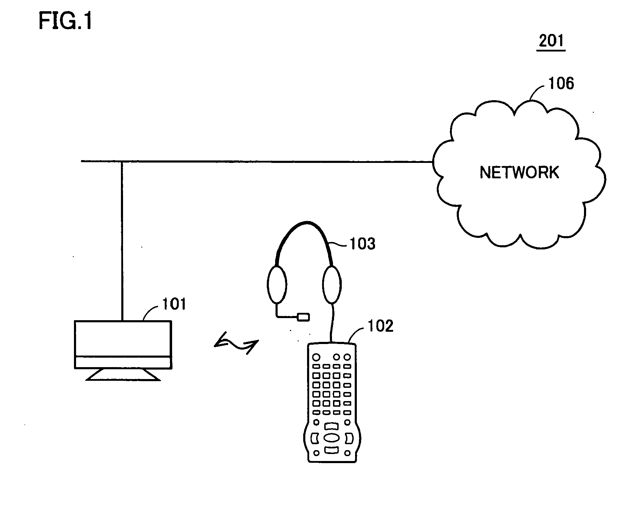

Referring to Fig. 1, a television system 201 according to an embodiment of the present invention includes a television device 101 and a remote controller device 102. A headset 103 is attached to remote controller device 102.

Television device 101 receives a television broadcast signal and displays video based on the received television broadcast signal. Television device 101 extracts an audio signal corresponding to the video to be displayed (television audio signal) from the received television broadcast signal to issue sound based on the extracted audio signal.

Television device 101 converts an internet telephone signal received via a network 106 to a radio signal for transmission to remote controller device 102. The internet telephone signal includes voice, ringing sound, and the like. Television device 101 may be configured to incorporate a transmitter that transmits a television radio signal, or have a wireless device connected thereto via an audio output terminal to which a headphone or the like is to be connected.

Remote controller device 102 converts the radio signal received from television device 101 to an audio signal (external audio signal), and provides the converted audio signal to headset 103.

Remote controller device 102 generates an operation signal based on an operation made by the user, and converts the generated operation signal to an optical signal that is a radio signal for transmission to television device 101.

Television device 101 and remote controller device 102 transmit and receive a radio signal based on infrared radiation or a communication scheme such as Bluetooth (registered trademark), wireless LAN (Local Area Network), and the like.

Television device 101 carries out an operation associated with the television such as turning on/off the power, changing the channel, and the like based on the optical signal received from remote controller device 102. Television device 101 also carries out an operation associated with an IP telephone such as issuing a call to another device via network 106 based on the optical signal received from remote controller device 102.

Remote controller device 102 generates an audio signal based on the voice of the user (external audio signal), and converts the generated audio signal to a radio signal for transmission to television device 101.

Television device 101 transmits an internet telephone signal to another device via network 106 based on the radio signal received from remote controller device 102.

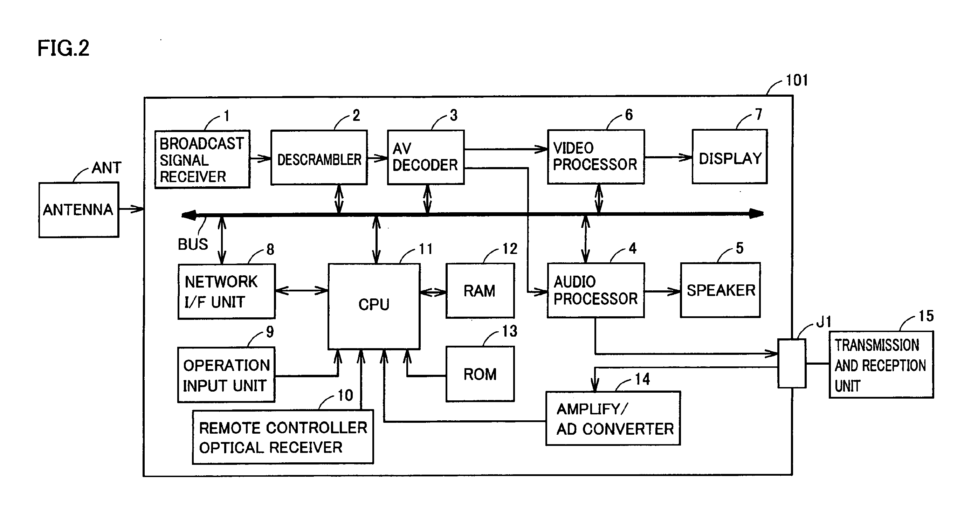

Fig. 2 is a functional block diagram of a configuration of a television device according to an embodiment of the present invention.

Referring to Fig. 2, television device 101 includes a broadcast signal receiver 1, a descrambler 2, an AV (Audio Visual) decoder 3, an audio processor (second audio processor) 4, a speaker 5, a video processor 6, a display (display unit) 7, a network I/F (interface) unit 8, an operation input unit 9, a remote controller optical receiver (receiver) 10, a CPU (Central Processing Unit) 11, a RAM (Random Access Memory) 12, a ROM (Read Only Memory) 13, an amplify/AD (Analog Digital) converter 14, and a jack (connector) J1. Television device 101 may be configured to include a transmission and reception unit 15.

Broadcast signal receiver 1 receives a television broadcast signal that is subjected to scrambling via an antenna ANT and provides the scrambled television broadcast signal to descrambler 2. Broadcast signal receiver 1 may be configured to receive a television broadcast signal via network 106.

Descrambler 2 decrambles the television broadcast signal from television signal receiver 1 to restore the signal to the state prior to scrambling, and provides the restored signal to AV decoder 3.

AV decoder 3 decodes the restored signal from descrambler 2 and provides the decoded signal to audio processor 4 and video processor 6.

Video processor 6 extracts a video signal from the decoded signal output from AV decoder 3, and provides the extracted video signal to display 7. Display 7 displays video based on the video signal received from video processor 6.

Audio processor 4 extracts an audio signal from the decoded signal output from AV decoder 3, i.e. obtains an audio signal corresponding to the video to be displayed by display 7. Audio processor 4 provides the extracted audio signal to speaker 5. Speaker 5 issues sound based on the audio signal received from audio processor 4.

Network interface unit 8 provides the internet telephone signal received through network 106 to CPU 11.

CPU 11 decodes the internet telephone signal and provides the decoded signal to audio processor 4. In the case where the internet telephone signal does not have to be subjected to a decoding process, CPU 11 directly provides the internet telephone signal to audio processor 4.

Audio processor 4 extracts an audio signal from the decoded signal received from CPU 11. Audio processor 4 provides the extracted audio signal to speaker 5. Speaker 5 issues sound based on the audio signal received from audio processor 4. Audio processor 4 provides the extracted audio signal to transmission and reception unit 15 via jack J1.

Transmission and reception unit 15 converts the audio signal from audio processor 4 to a radio signal for transmission to remote controller device 102. Transmission and reception unit 15 receives and provides to amplify/AD converter 14 the radio signal from remote controller device 102. Transmission and reception unit 15 accommodates IEEE802.11a/11b/11g, i.e. WiFi (Wireless Fidelity), that is the standard of a wireless LAN.

Amplify/AD converter 14 amplifies the signal received from transmission and reception unit 15, and converts the amplify signal to a digital signal for output to CPU 11.

Operation input unit 9 detects an operation made by the user such as depressing a button at television device 101, and provides an operation signal representing the detected result to CPU 11.

Remote controller optical receiver 10 converts the optical signal that is the radio signal received from remote controller device 102 to an operation signal representing the operation mode by the user at remote controller device 102, and provides the operation signal to CPU 11.

CPU 11 controls video processor 6 such that an image is displayed at display 7, or controls audio processor 4 such that sound is issued from speaker 5, according to the signals received from amplify/AD converter 14, operation input unit 9 and remote controller optical receiver 10. For example, CPU 11 applies a predetermined signal process on the digital signal received from amplify/AD converter 14 and provides the processed signal to audio processor 4. Audio processor 4 converts the signal received from CPU 11 to an audio signal representing the voice of the user received by remote controller device 102, and provides the converted audio signal to speaker 5. In the case where the digital signal is the audio signal per se, the audio signal is provided to speaker 5 via CPU 11 and audio processor 4.

CPU 11 generates an internet telephone signal based on the signals received from amplify/AD converter 14, operation input unit 9, and remote controller optical receiver 10 to provide the generated internet telephone signal to network interface unit 8. The internet telephone signal includes the telephone number corresponding to another device that is the party of communication, as well as the user's voice received by remote controller device 102, and the like.

Network interface unit 8 transmits the internet telephone signal from CPU 11 to another device through network 106.

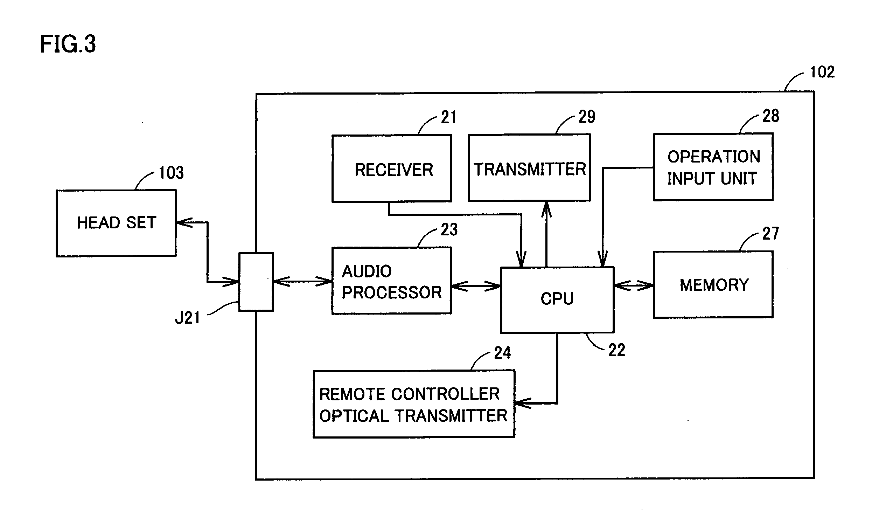

Referring to Fig. 3, remote controller device 102 includes a receiver 21, a CPU (Control Unit) 22, an audio processor (first audio processor) 23, a remote controller optical transmitter (transmitter) 24, a memory 27, an operation input unit 28, and a jack (connector) J21. Receiver 21 and transmitter 29 accommodate IEEE802.11a/11b/11g, i.e. WiFi (Wireless Fidelity), that is the standard of a wireless LAN.

Jack J21 has a headset 103 connected thereto. An earphone or a headphone may be connected to jack J21.

Headset 103 converts the user's voice into an electric signal for output to audio processor 23.

Audio processor 23 applies a predetermined signal process on the electric signal received from headset 103 to generate an audio signal, which is provided to transmitter 29 via CPU 22.

Transmitter 29 converts the audio signal received from CPU 22 to a radio signal for transmission to television device 101.

Operation input unit 28 includes a plurality of buttons, and detects whether each button has been depressed or not by the user. Operation input unit 28 generates an operation signal representing the detected result, and provides the operation signal to a remote controller optical transmitter 24 via CPU 22.

Remote controller optical transmitter 24 converts the operation signal received from CPU 22 into an optical signal that is a radio signal for transmission to television device 101.

Receiver 21 receives the radio signal from television device 101, and provides the received signal to CPU 22 as a reception signal.

CPU 22 provides the reception signal from receiver 21 to audio processor 23.

Audio processor 23 converts the reception signal from CPU 22 to an audio signal. Then, audio processor 23 provides the converted audio signal to headset 103 via jack J21. Headset 103 issues sound based on the audio signal received from audio processor 23. Remote controller device 102 may be configured to have a microphone and speaker built in, instead of having headset 103 connected thereto.

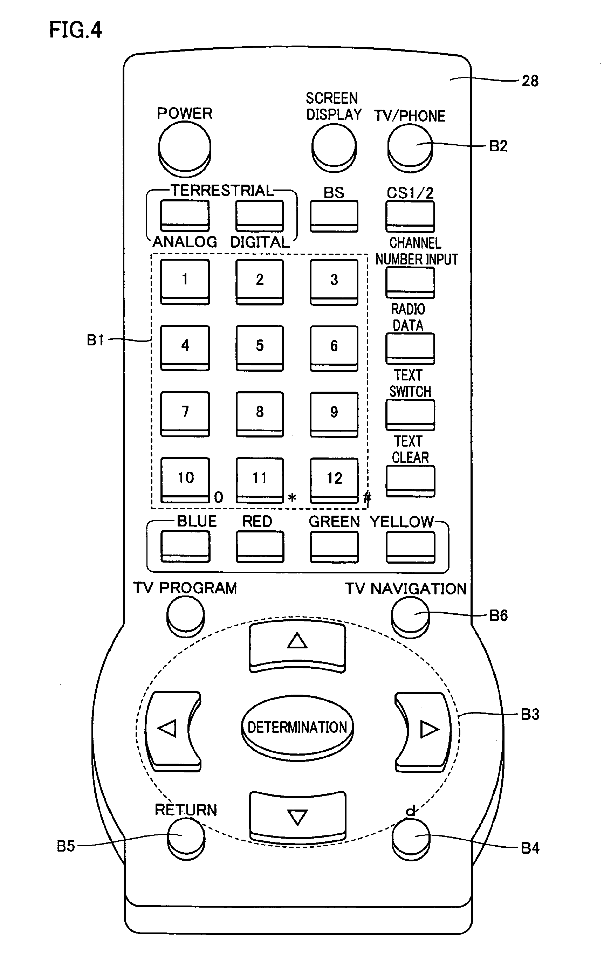

Referring to Fig. 4, operation input unit 28 includes a numeric-key button region B1, a mode switching button B2, a cursor button region B3, a volume adjust button B4, a clear button B5, and a conversation cut button B6.

Numeric-key button region B1 includes twelve numeric-key buttons corresponding to the numbers 1-12 for entry of the television channel number and telephone number. The numeric-key buttons corresponding to the numbers of 10, 11, and 12 are used as "0", "*" and "#", respectively, in a telephone mode.

Mode switching button B2 is used to select a telephone mode or a television mode.

Cursor button region B3 includes four direction buttons to move the cursor vertically and horizontally on the screen of display 7, and a determination button to designate decision.

Volume adjust button B4 is used to adjust the volume of speaker 5 of television device 101.

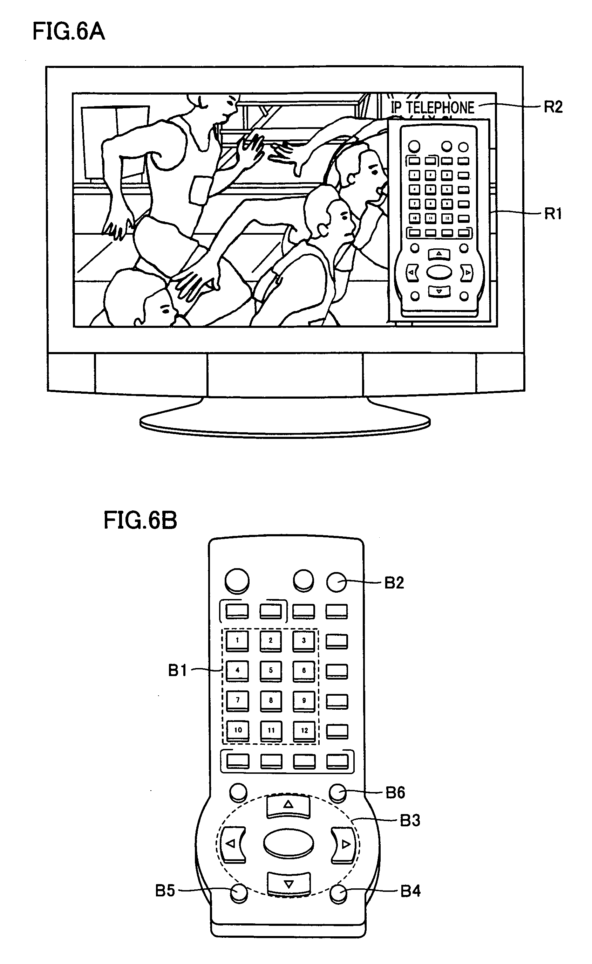

Figs. 6A - 12A represent a screen display and appearance of television device 101 according to an embodiment of the present invention. Figs. 6B - 12B represent an appearance of remote controller device 102 corresponding to Figs. 6A - 12A, respectively.

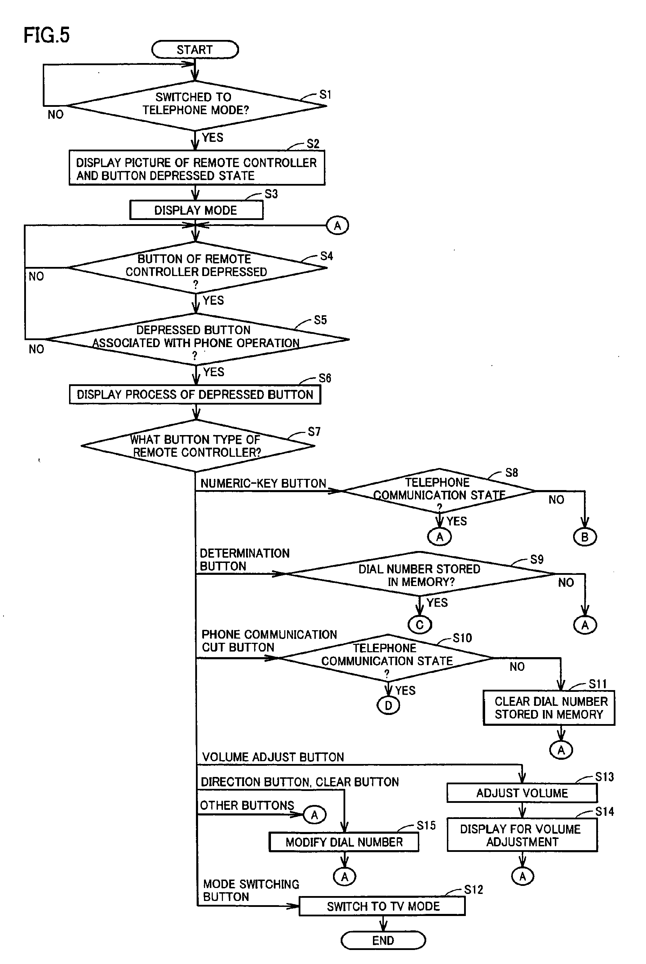

Referring to the flowchart of Fig. 5 corresponding to the operation procedure of television system 201, CPU 11 effects a switching process to a telephone mode in the case where the operation signal from remote controller optical receiver 10 represents depression of mode switching button B2 in the event of currently in the television mode (YES at step S1). Specifically, CPU 11 provides a control signal to video processor 6. Video processor 6 generates a video signal based on the control signal from CPU 11 and provides the generated video signal to display 7. Display 7 displays video corresponding to the television broadcast signal based on the video signal from video processor 6, and also displays a picture of remote controller device 102 including a plurality of buttons at operation input unit 28. The image of the depressed form of mode switching button B2 and a non-depressed form of the other buttons that are not depressed in operation input unit 28 are displayed (step S2, R1 in Fig. 6A). Display 7 may be configured not to display video corresponding to the television broadcast signal in a telephone mode.

In addition, CPU 11 controls video processor 6 and display 7 such that the text of "IP telephone" representing a telephone mode is displayed on the screen (step S3, R2 in Fig. 6A).

Then, CPU 11 waits for a button to be depressed at operation input unit 28 of remote controller device 102 (NO at step S4). In the case where a button at operation input unit 28 of remote controller device 102 is depressed, i.e. the operation signal from remote controller optical receiver 10 represents button depression (YES at step S4), and the depressed button is not associated with a telephone operation (NO at step S5), waiting is conducted until the next depression of a button at operation input unit 28 of remote controller device 102.

In the case where a button at operation input unit 28 of remote controller device 102 is depressed (YES at step S4) and the depressed button is associated with a telephone operation (YES at step S5), CPU 11 controls video processor 6 and display 7 such that the plurality of buttons of operation input unit 28 are displayed in the relevant depressed or non-depressed form. More specifically, CPU 11 provides a control signal to video processor 6. Video processor 6 generates a video signal based on the control signal received from CPU 11, and provides the generated video signal to display 7. Display 7 displays a picture of remote controller device 102 with the plurality of buttons of operation input unit 28 based on the video signal from video processor 6. Each of the plurality of buttons of operation input unit 28 is indicated in a relevant depressed or non-depress state (step S6). In the case where the operation signal from remote controller optical receiver 10 indicates that the button is raised as a result of the user canceling the depression, CPU 11 controls video processor 6 and display 7 to modify the image of the depressed button to a non-depressed form, and causes the button that was depressed to blink for a predetermined time.

In the case where the depressed button is a numeric-key button in numeric-key button region B1 (step S7), and the user is currently making a telephone call through television system 201 (YES at step S8), CPU 11 waits for the next depression of a button at operation input unit 28 of remote controller device 102 (step S4).

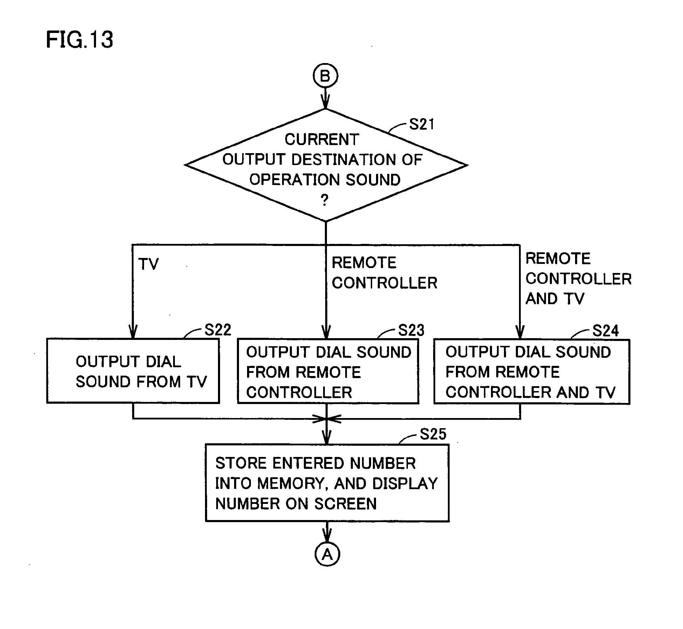

When the depressed button is a numeric-key button in numeric-key button region B1 (step S7), and not in a telephone communication state (NO at step S8), a dial process that will be described afterwards with reference to Fig. 13 is carried out.

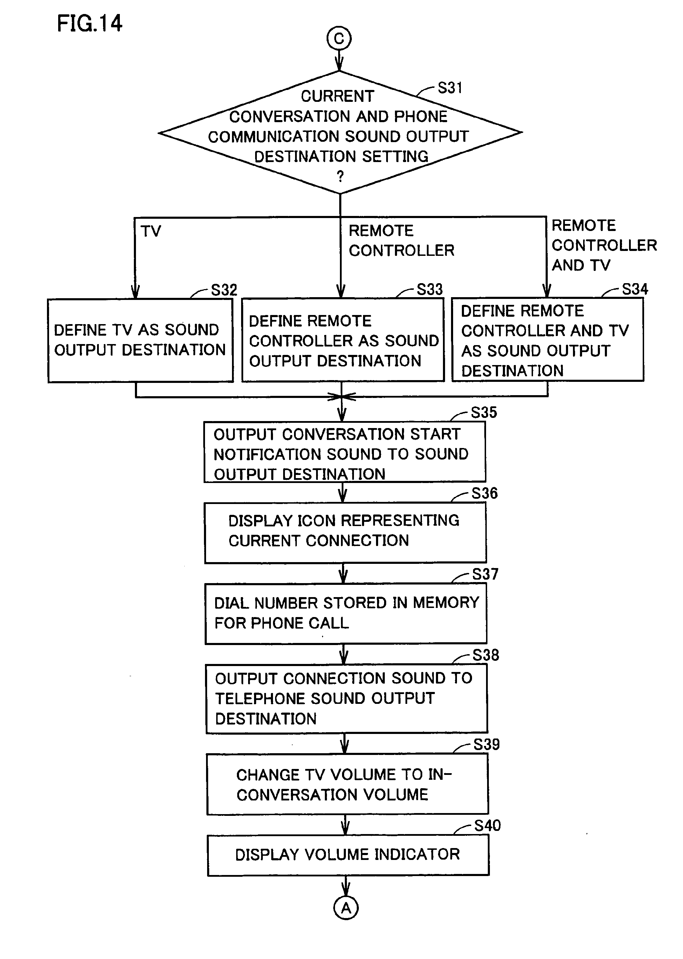

In the case where the depressed button is the determination button at cursor button region B3 (step S7), and a dial number is stored in RAM 12 (YES at step S9), a calling process that will be described afterwards with reference to Fig. 14 is carried out.

In the case where the depressed button is the determination button of cursor button region B3 (step S7), and a dial number is not stored in RAM 12 (NO at step S9), CPU 11 waits for the next depression of a button at operation input unit 28 of remote controller device 102 (step S4).

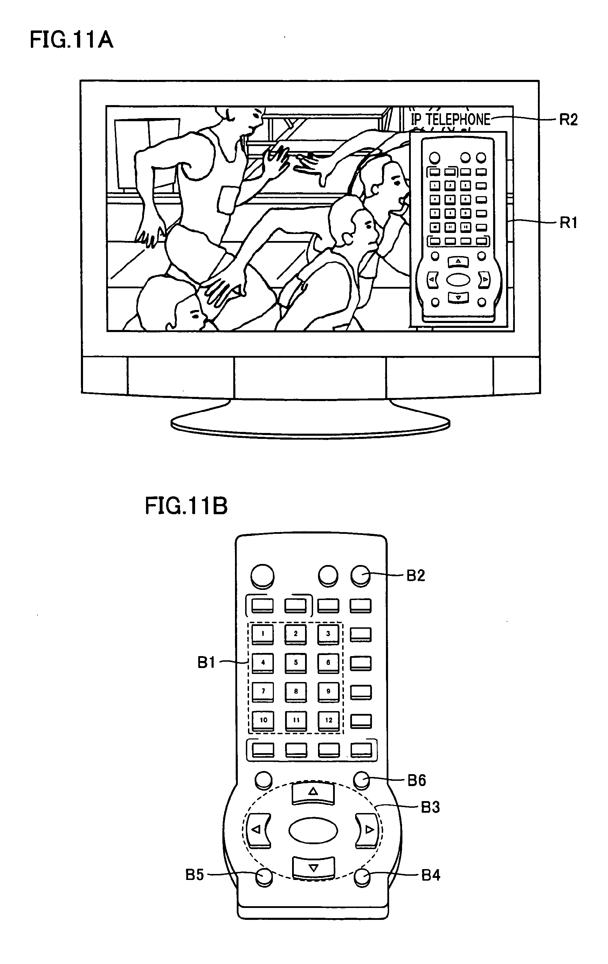

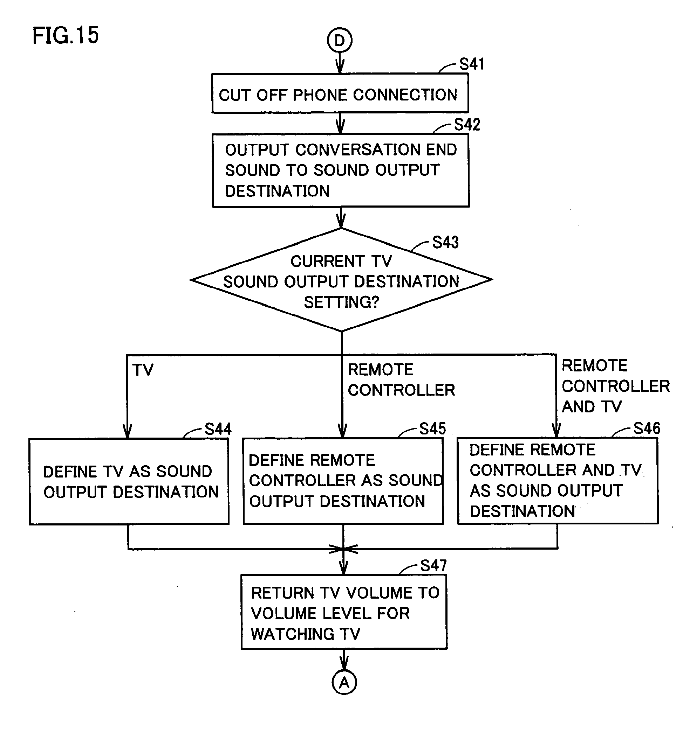

In the case where the depressed button is conversation cut button B6 (step S7), and television device 101 is establishing a telephone communication state (YES at step S10), a disconnection process that will be described afterwards with reference to Fig. 15 is carried out. CPU 11 may be configured to carry out the disconnecting process of Fig. 15 in the case where the determination button at cursor button region B3 is depressed for three seconds or more and television device 101 is in a telephone communication state (Fig. 11A).

In the case where the depressed button is conversation cut button B6 (step S7), and television device 101 is not currently in a telephone communication state (NO at step S10), the dial number stored in RAM 12 is deleted (step S11), and CPU 11 waits for the next depression of a button at operation input unit 28 of remote controller device 102 (step S4).

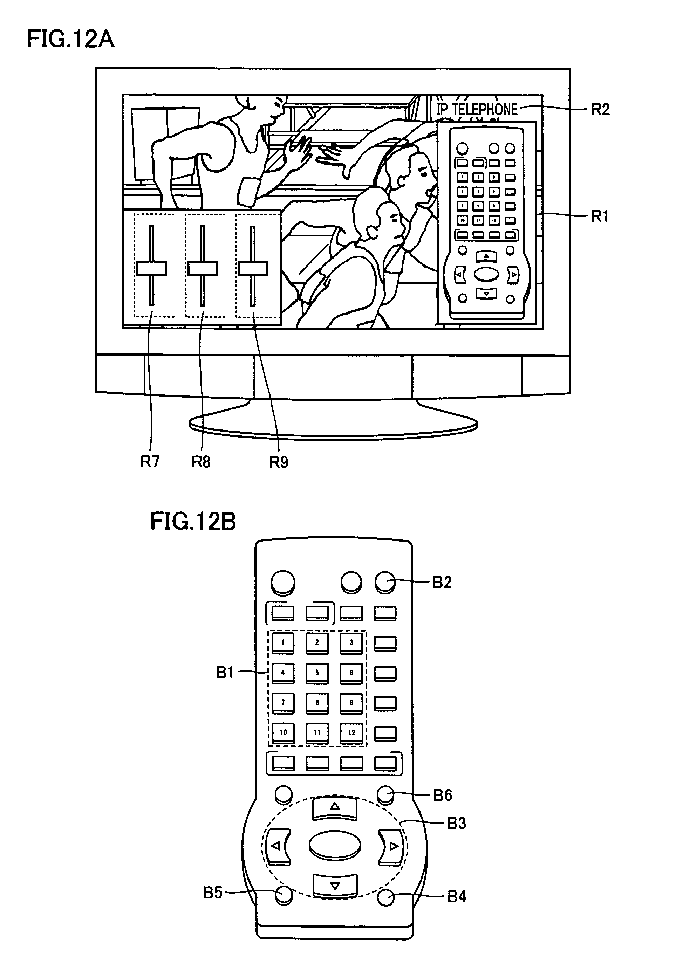

In the case where the depressed button is volume adjust button B4 (step S7), CPU 11 controls audio processor 4 and speaker 5 to change the volume of the television and the IP telephone (step S13). In addition, CPU 11 controls video processor 6 and display 7 such that a television volume adjust image R7, an IP telephone volume adjustment image R8, and a microphone sensitivity adjustment image R9 are displayed (step S 14 and Fig. 12A). CPU 11 waits for the next depression of a button at operation input unit 28 of remote controller device 102 (step S4).

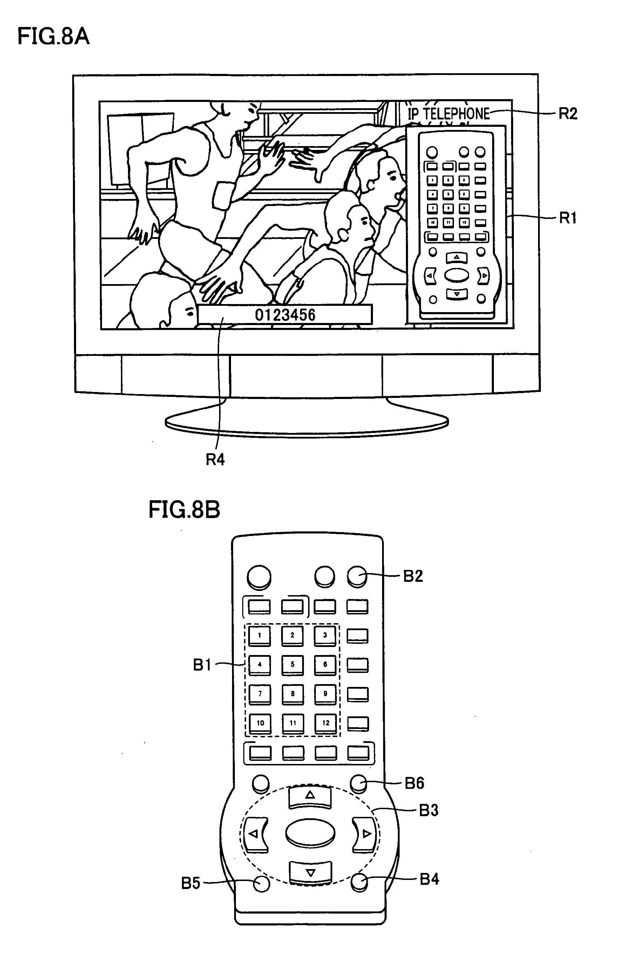

Referring to Figs. 8A and 8B, in the case where the depressed button is a direction button in cursor button region B3 or clear button B5 (step S7), CPU 11 modifies the content of the dial number stored in RAM 12 such as deleting one number from the plurality of dial numbers stored in RAM 12 according to the combination of the depressed buttons (step S 15, R1 and R4 in Fig. 8A).

In the case where the depressed button is mode switching button B2 (step S7), CPU 11 effects a switching process to a television mode (step S12).

In the case where the depressed button is a button other than those set forth above (step S7), CPU 11 waits for the next depression of a button in operation input unit 28 at remote controller device 102 (step S4).

Referring to the flowchart of Fig. 13 corresponding to a dialing procedure, in the case where television device 101 is set as the operation sound output destination (step S21), CPU 11 controls audio processor 4 such that sound corresponding to the depressed numeric-key button is issued from speaker 5. Specifically, audio processor 4 generates an operation sound signal corresponding to the depressed numeric-key button and provides the generated signal to speaker 5 under control of CPU 11. Speaker 5 issues sound based on the operation sound signal received from audio processor 4 (step S22).

CPU 11 controls speaker 5 such that sound is not issued therefrom in the case where remote controller device 102 is set as the operation sound output destination (step S21). CPU 22 of remote controller device 102 controls audio processor 23 such that sound corresponding to the depressed numeric-key button is issued from headset 103 (step S23), in the case where remote controller device 102 is set as the operation sound output destination (step S21).

In the case where television device 101 and remote controller device 102 are both set as the operation sound output destination (step 521), CPU 11 and CPU 22 cause sound corresponding to the depressed numeric-key button to be issued from speaker 5 and headset 103, respectively (step S24).

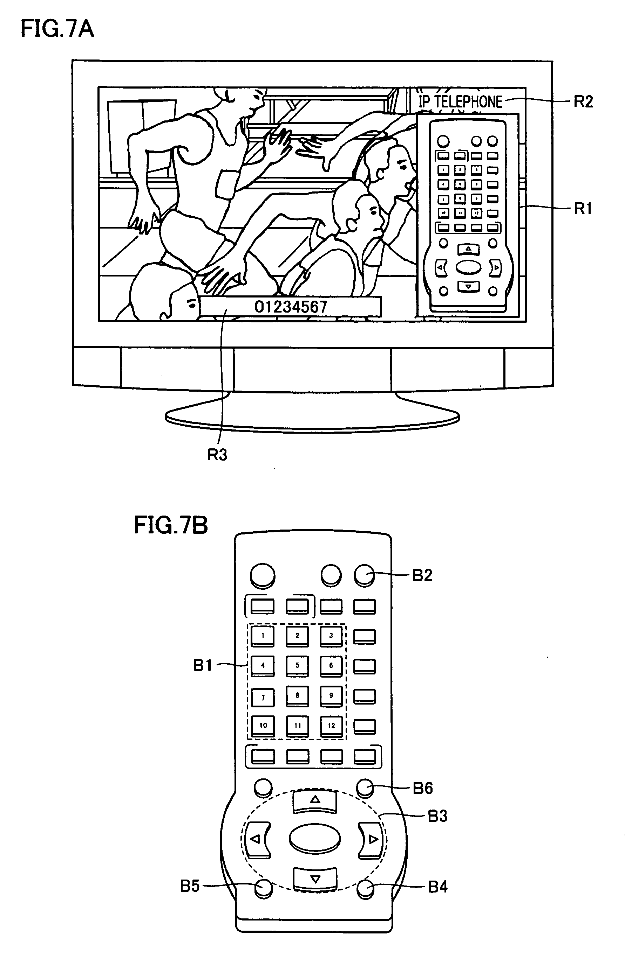

Then, CPU 11 stores the number corresponding to the depressed numeric-key button sequentially into RAM 12 as the dial number. CPU I 1 controls video processor 6 and display 7 to display one or more dial numbers stored in RAM 12 (step S25, R1 and R3 in Fig. 7A).

By the configuration of issuing sound corresponding to the depressed numeric-key button from television device 101, or displaying the dial number at television device 101, the operability of remote controller device 102 can be improved.

CPU 11 waits for the next depression of a button at operation input unit 28 of remote controller device 102 (step S4).

Referring to the flowchart of Fig. 14 corresponding to the procedure of a calling process carried out by television system 201, in the case where television device 101 is defined as the telephone sound output destination of television device 101 (step S31), CPU 11 determines that sound is to be output from speaker 5 (step S32).

In the case where remote controller device 102 is set as the telephone sound output destination (step S31), CPU 11 determines that sound output from speaker 5 is to be suppressed. In contrast, CPU 22 of remote controller device 102 determines that sound is to be output from headset 103 (step S33).

In the case where television device 101 and remote controller device 102 are both set as the telephone sound output destination (step S31), CPU 11 and CPU 22 determine that sound is to be output from speaker 5 and headset 103, respectively (step S34).

In the case where television device 101 is set as the telephone sound output destination (step S31), CPU 11 controls audio processor 4 such that a conversation start notification sound is issued from speaker 5 (S35).

In the case where remote controller device 102 is set as the telephone sound output destination (step S31), CPU 11 suppresses the output of a conversation start notification sound from speaker 5. In the case where remote controller device 102 is set as the telephone sound output destination (step S31), CPU 11 controls audio processor 4 and transmission and reception unit 15 such that a radio signal including the conversation start notification sound is transmitted to remote controller device 102. CPU 22 of remote controller device 102 controls audio processor 23 based on the conversation start notification sound received from television device 101 such that the conversation start notification sound is output from headset 103 (step S35).

When television device 101 and remote controller device 102 are both set as the telephone sound output destination (step S31), CPU 11 and CPU 22 causes the conversation start notification sound to be issued from speaker 5 and headset 103, respectively (step S35).

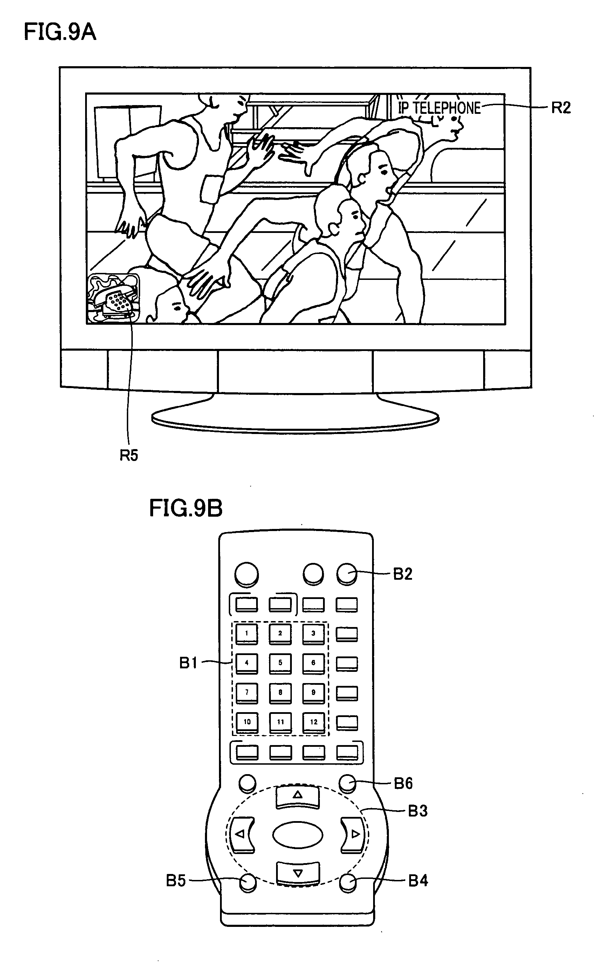

CPU 11 controls video processor 6 and display 7 such that an icon representing that a telephone connection is currently established is displayed concurrently with the video corresponding to a television broadcast signal (step S36, R5 in Fig. 9 (A)).

Then, CPU 11 dials the number stored in RAM 12 to establish a telephone call. Specifically, CPU 11 generates an internet telephone signal including the dial number stored in RAM 12, and provides the internet telephone signal to network interface unit 8. Network interface unit 8 transmits the internet telephone signal received from CPU 11 to network 106 (step S37).

CPU 11 or CPU 22 issues the connection sound from at least one of speaker 5 and headset 103 corresponding to the setting of the telephone sound output destination (step S38).

CPU 11 controls audio processor 4 and speaker 5 such that the volume of sound corresponding to the television broadcast signal to be issued from speaker 5 is altered from the volume for a television mode to the volume for a telephone mode. For example, speaker 5 has the volume of the sound corresponding to the television broadcast signal set to a lower level when a telephone mode is selected than the level when a television mode is selected (step S39). When television device 101 is configured with two speakers located at the left side and right side, CPU 11 may be configured to adjust the relationship of the volume of the sound corresponding to a television broadcast signal and the level of the telephone sound taking advantage of auditory lateralization.

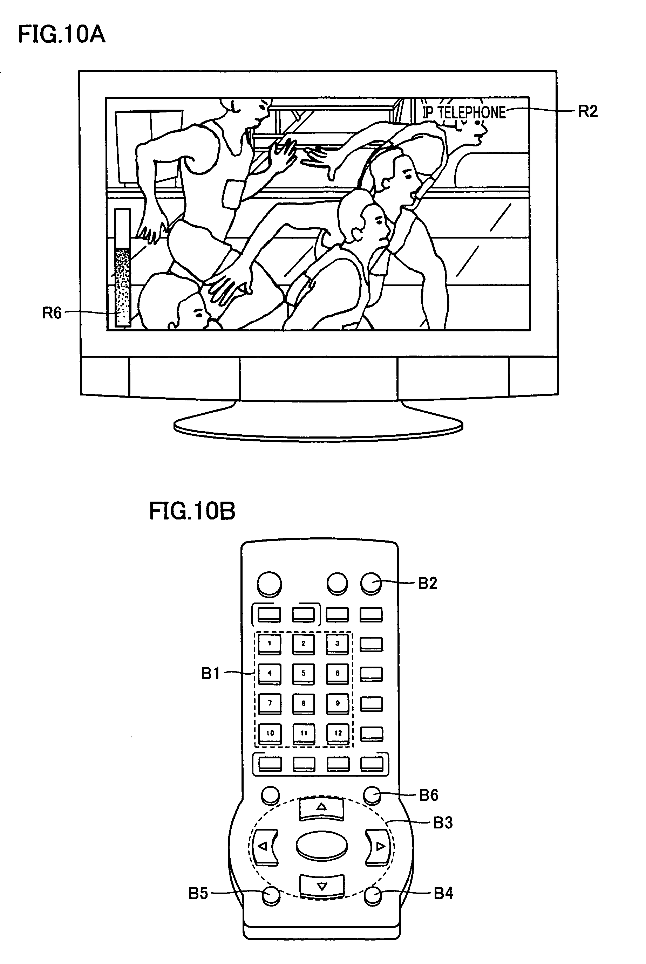

CPU 11 controls video processor 6 and display 7 such that an indicator representing the volume of the user's voice received at remote controller device 102 is displayed concurrently with the video corresponding to the television broadcast signal (step S40, R6 in Fig. 10 (A)).

CPU 11 may be configured to take a numeric-key button as the button for a television channel, after the calling process. By such a configuration, remotely controlling the television such as changing the television channel can be effected during a conversation state.

Referring to the flowchart of Fig. 15 corresponding to the disconnection procedure, CPU 11 controls network interface unit 8 such that the telephone connection with another device is disconnected (step S41).

CPU 11 or CPU 22 causes a conversation end sound to be output from at least one of speaker 5 and headset 103 according to the setting of the telephone sound output destination (step S42).

In the case where television device 101 is set as the television sound output destination (step S43), CPU 11 determines that sound is to be issued from speaker 5 (step S44).

In the case where remote controller device 102 is set as the television sound output destination (step S43), CPU 11 determines that sound from speaker 5 is to be suppressed. CPU 22 of remote controller device 102 determines that sound is to be issued from headset 103 (step S45).

When television device 101 and remote controller device 102 are both set as the television sound output destination (step S43), CPU 11 and CPU 22 determine that sound is to be issued from speaker 5 and headset 103, respectively (step S46).

Then, CPU 11 controls audio processor 4 and speaker 5 such that the volume of sound corresponding to a television broadcast signal to be output from speaker 5 is altered to the volume level for a television mode from the volume level for a telephone mode.

The television devices disclosed in Patent Documents 1-5 lack sufficient measures to improve the operability of the remote controller device. In the television system according to an embodiment of the present invention, CPU 11 controls video processor 6 and display 7 such that the plurality of buttons at operation input unit 28 are displayed in a depressed form or non-depressed form, in the case where a button at operation input unit 28 of remote controller device 102 is depressed and the depressed button is associated with a telephone operation. By the cooperative configuration of the dial operation of the remote controller device and the screen display of the television device, erroneous dialing by the user can be prevented while improving the operability of the remote controller device.

Although the present invention has been described and illustrated in detail, it is clearly understood that the same is by way of illustration and example only and is not to be taken by way of limitation, the scope of the present invention being interpreted by the terms of the appended claims.

## Claims

1. A television system comprising:
a television device (101), and
a remote controller device (102),
wherein said remote controller device (102) includes
a first audio processor (23) converting externally received sound to an external audio signal,
an operation unit (28) including a plurality of buttons (B1-B6), detecting whether each of said plurality of buttons (B1-B6) is depressed or not to generate an operation signal representing a detected result, and
a transmitter (29) converting said external audio signal and said operation signal to a radio signal for transmission,
wherein said television device (101) includes
a receiver (15) receiving said radio signal from said remote controller device (102) for conversion to said external audio signal and said operation signal,
a network interface unit (8) transmitting a telephone signal onto a network (106) based on said external audio signal and said operation signal,
a display unit (7) displaying a depressed form or a non-depressed form of each of said plurality of buttons (B1-B6) based on said operation signal,
a second audio processor (4) generating an operation sound signal corresponding to a depressed button based on said operation signal, and
a speaker (5) issuing sound based on said operation sound signal,
said plurality of buttons (B1-B6) including
a mode switching button (B2) to designate selection of a telephone mode or a television mode, and
a numeric-key button (B1) for entry of a telephone number,
said receiver (15) further receiving a television broadcast signal,
wherein said television device (101) further includes a video processor (6) extracting a video signal from said received television broadcast signal,
said display unit (7) concurrently displaying, based on said operation signal, a number corresponding to a depressed numeric-key button (B1), a depressed form or non-depressed form of each of said plurality of buttons (B1-B6), and video based on said video signal, when said numeric-key button (B1) is depressed in a telephone mode selected state,
said second audio processor (4) further extracting a television audio signal from said received television broadcast signal,
said speaker (5) issuing sound based on said extracted television audio signal at a volume differing between a telephone mode selected state and a television mode selected state, based on said operation signal,
said display unit (7) concurrently displaying, based on said operation signal and said external audio signal, an indicator representing the volume of sound received by first audio processor (23), a depressed form or non-depressed form of each of said plurality of buttons (B1-B6), and video based on said video signal, when in said telephone mode selected state.

2. A television system comprising:
a television device (101), and
a remote controller device (102),
wherein said remote controller device (102) includes
a first audio processor (23) converting externally received sound to an external audio signal,
an operation unit (28) including a plurality of buttons (B1-B6), detecting whether each of said plurality of buttons (B1-B6) is depressed or not to generate an operation signal representing a detected result, and
a transmitter (29) converting said external audio signal and said operation signal to a radio signal for transmission,
wherein said television device (101) includes
a receiver (1, 10) receiving said radio signal from said remote controller device (102) for conversion to said external audio signal and said operation signal,
a network interface unit (8) transmitting a telephone signal onto a network (106) based on said external audio signal and said operation signal, and
a display unit (7) displaying a depressed form or non-depressed form of each of said plurality of buttons (B1-B6) based on said operation signal.

3. The television system according to claim 2, wherein said television device (101) further includes
a second audio processor (4) generating an operation sound signal corresponding to a depressed button based on said operation signal, and
a speaker (5) issuing sound based on said operation sound signal.

4. The television system according to claim 2, said plurality of buttons (B1-B6) including
a mode switching button (B2) to designate selection of a telephone mode or a television mode, and
a numeric-key button (B1) for entry of a telephone number,
said display unit (7) further displaying a number corresponding to a depressed numeric-key button (B1) when said numeric-key button (B1) is depressed in a telephone mode selected state based on said operation signal.

5. The television system according to claim 2, said receiver (1, 10) further receiving a television broadcast signal,
wherein said television device (101) further includes a video processor (6) extracting a video signal from said received television broadcast signal,
said display unit (7) displaying concurrently, based on said operation signal, a depressed form or non-depressed form of each of said plurality of buttons (B1-B6), and video based on said video signal.

6. The television system according to claim 2, said plurality of buttons (B1-B6) including
a mode switching button (B2) to designate selection of a telephone mode or a television mode, and
a numeric-key button (B1) for entry of a telephone number,
said receiver (1, 10) further receiving a television broadcast signal,
wherein said television device (101) further includes a video processor (6) extracting a video signal from said received television broadcast signal,
said display unit (7) concurrently displaying, based on said operation signal, a number corresponding to a depressed numeric-key button (B1), a depressed form or non-depressed form of each of said plurality of buttons (B1-B6), and video based on said video signal, when said numeric-key button (B1)is depressed in a telephone mode selected state.

7. The television system according to claim 2, said plurality of buttons (B1-B6) including a mode switching button (B2) to designate selection of a telephone mode or a television mode,
said receiver (1, 10) further receiving a television broadcast signal,
wherein said television device (101) further includes
a second audio processor (4) extracting a television audio signal from said received television broadcast signal, and
a speaker (5) issuing sound based on said extracted television audio signal at a volume differing between a telephone mode selected state and a television mode selected state, based on said operation signal.

8. The television system according to claim 2, said plurality of buttons (B1-B6) including a mode switching button (B2) to designate selection of a telephone mode or a television mode,
said receiver (1, 10) further receiving a television broadcast signal,
wherein said television device (101) further includes
a video processor (6) extracting a video signal from said received television broadcast signal,
said display unit (7) concurrently displaying, based on said operation signal and said external audio signal, an indicator representing the volume of sound received by said first audio processor (23), a depressed form or non-depressed form of each of said plurality of buttons (B1-B6), and video based on said video signal when in a telephone mode selected state.

9. A television device (101) remotely controlled by a remote controller device (102),
wherein said remote controller device (102) includes
a first audio processor (23) converting externally received sound to an external audio signal,
an operation unit (28) including a plurality of buttons (B1-B6), detecting whether each of said plurality of buttons (B1-B6) is depressed or not to generate an operation signal representing a detected result, and
a transmitter (29) converting said external audio signal and said operation signal to a radio signal for transmission,
said television device including:
a receiver (10) receiving said radio signal from said remote controller device (102) for conversion into said external audio signal and said operation signal,
a network interface unit (8) transmitting a telephone signal onto a network (106) based on said external audio signal and said operation signal and
a display unit (7) displaying a depressed form or non-depressed form of each of said plurality of buttons (B1-B6) based on said operation signal.
